# EUROPEAN PATENT SPECIFICATION

(11) **EP 3 372 515 B1**
(45) Date of publication and mention of the grant of the patent: **29.04.2020**
(21) Application number: 18157206.6
(22) Date of filing: 16.02.2018
(51) Int. Cl.: B65B 39/12, B65B 3/00, B65B 25/00, B65B 39/00

(54) **NOZZLE ASSEMBLY FOR HEAD FOR DISPENSING FOODCREAMS**
DÜSENANORDNUNG FÜR KOPF ZUR ABGABE VON LEBENSMITTELCREMES
ENSEMBLE BUSE POUR TÊTE DE DISTRIBUTION DE CRÈMES ALIMENTAIRES

(30) Priority: 10.03.2017 LU 100137
(43) Date of publication of application: 12.09.2018
(73) Proprietor: Soremartec S.A., 2633 Senningerberg (LU)
(72) Inventor: FERRARIO, Rossano, I-23880 Casatenovo (LC) (IT); NEGRO, Mathia, I-14100 Asti (AT) (IT)
(74) Representative: Frontoni, Stefano

(56) References cited:
- CA-C- 1 290 974
- DE-A1-102004 055 327
- US-A- 5 620 713

## Description

### Field of the invention

The present invention relates to a nozzle assembly for heads for dispensing food-creams.

In particular, the present invention refers to simultaneous dispensing of a number of food-creams to obtain a dispensed product constituted by the combination of at least two creams, as, for example, in the case of desserts that combine together creams of different flavours and/or colours.

### Prior art

In this connection, the document No. FR 2708563 describes a nozzle assembly of conventional type for dispensing two creams according to a geometry with concentric circles. This nozzle assembly has a central duct for dispensing the cream at the centre and a set of ducts arranged around the central duct for dispensing the cream peripherally. The ducts in question are supplied by differentiated passages for the two creams. CA1290974C discloses the features of the preambles of claims 1 and 8.

### Object and purpose of the invention

The object of the present invention is to improve the above known solution, in particular in order to be able to create with the creams that are dispensed patterns that present sharper contours and possibly also patterns that are more elaborate.

The above purposes are achieved via a nozzle assembly having the characteristics specified in Claim 1.

The present invention moreover regards a method for dispensing food-creams according to Claim 8.

The claims form an integral part of the technical teaching provided herein in relation to the invention.

### Brief description of the drawings and detailed description of one or more embodiments of the invention

Further characteristics and advantages of the invention will emerge clearly from the ensuing description with reference to the annexed drawings, which are provided purely by way of non-limiting example and in which:
- Figure 1 is an axonometric view of an embodiment of the nozzle assembly described herein;
- Figure 2 illustrates an example of a product dispensed via the nozzle assembly of Figure 1;
- Figures 3a, 3b, and 3c are, respectively, a view from beneath, a side view, and a front view of the nozzle assembly of Figure 1;
- Figure 4 is an axonometric view of the nozzle assembly of Figure 1 sectioned along the plane of section IV-IV of Figure 1;

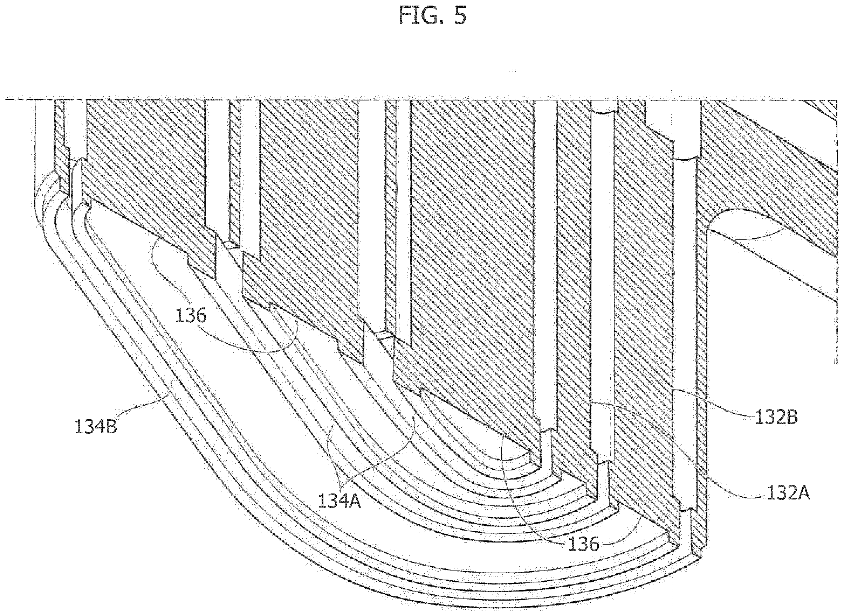

- Figure 5 is a view from beneath of a detail of the sectioned nozzle assembly of Figure 4;
- Figures 6A to 6C illustrate successive steps of a dispensing operation carried out through the nozzle assembly of Figure 1;
- Figure 7A is a cross-sectional view of a nozzle assembly according to the known art; and
- Figure 7B is a top plan view of a product dispensed by the nozzle assembly of Figure 7A.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are only provided for convenience and hence do not define the sphere of protection or the scope of the embodiments.

As has been said above, the present invention regards simultaneous dispensing of a number of food-creams for providing a dispensed product constituted precisely by the combination of at least two creams.

In the first place, the subject of the present invention is a nozzle assembly configured for simultaneous dispensing of two creams in one and the same container to provide a dispensed product that reproduces on its top surface, at least, given patterns with purely aesthetic purposes, obtained from the particular arrangement of the creams.

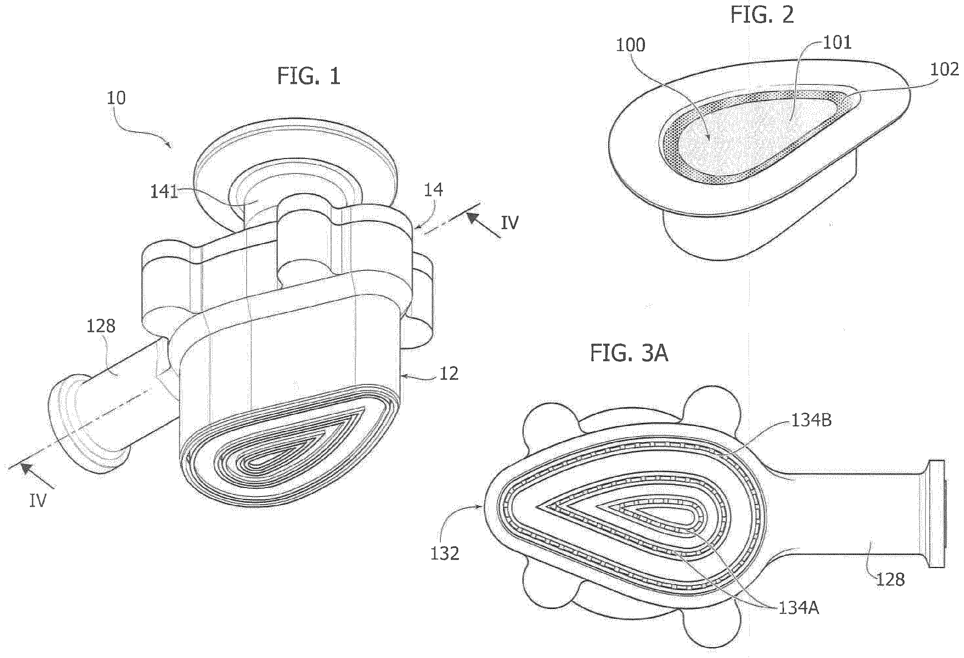

In this connection, Figure 2 illustrates a pot containing a product 100 dispensed through the nozzle assembly described herein, in the embodiment according to Figure 1. On its top surface, the product 100 shows two shapes 101, 102, an inner one and an outer one, both characterized by an overall droplike profile.

In a preferred embodiment, the nozzle assembly described herein, designated as a whole by the reference number 10, comprises a distribution body 12 and a connection plate 14.

The body 12 and the plate 14 are both preferably made of steel. In general, materials that are suitable for contact with foodstuffs and that can be washed and sterilized with chemical agents and/or with steam are in fact to be preferred.

The body 12 defines at the top two cavities 122, 124, the first surrounded by the second, separated by a closed wall 126. The plate 14 is fixed on the body 12 at the top side of the latter, thus closing the cavity and creating a first, central, chamber A and a second, perimetral, chamber B.

A first tubular portion 128, made of a single piece with the body 12, connects up to the chamber B at a first end thereof and terminates with an attachment flange at its opposite end.

Made of a single piece with the flange 14 is, instead, a tubular portion 141 that connects up to the central chamber A at a first end thereof and in turn terminates with a connection flange at its opposite end.

The distribution body 12 has a block 132, which extends downwards from the bottom of the cavity 122, 124 and has, on its inside, a plurality of ducts 132A and 132B, and, on its underside, a series of channels 134A and 134B on which the aforesaid ducts give out.

In particular, the ducts 132A set in connection the chamber A with the channels 134A, while the ducts 132B set in connection the chamber B with the single channel 134B.

In the light of what has been said above, it is now evident that the nozzle assembly described herein defines a first circuit for supply of a first cream, which envisages entry of the cream into the nozzle assembly from the tubular portion 141, passage within the chamber A, distribution thereof between the ducts 132A, and accumulation in the channels 134A before it is dispensed. The nozzle assembly then comprises a second circuit for supply of a second cream, which envisages entry of the cream into the nozzle assembly from the tubular portion 128, passage within the annular chamber B, distribution thereof between the ducts 132B, and accumulation of the cream in the channel 134B.

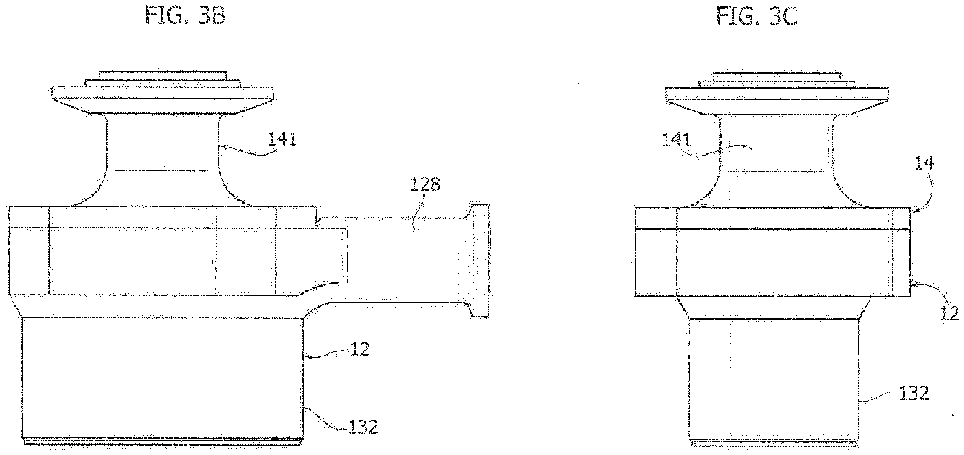

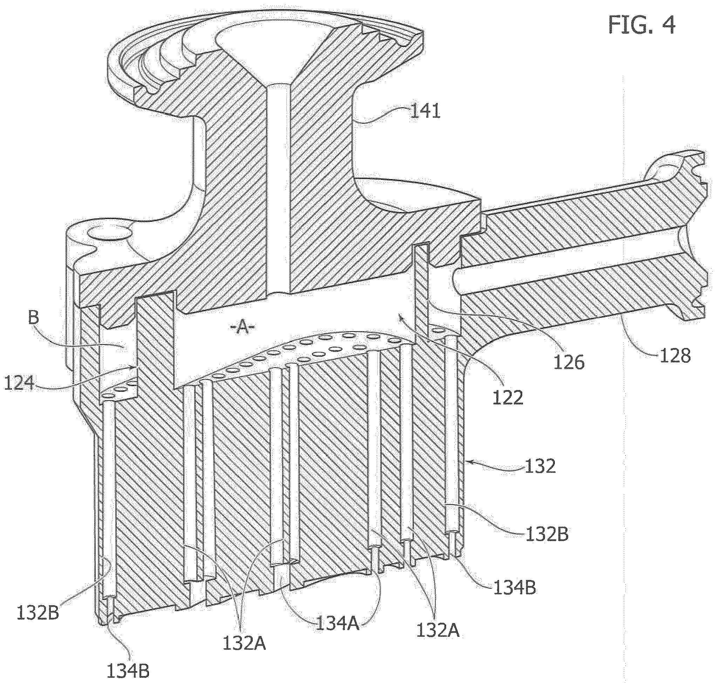

With reference to Figures 3A and 4, it will be noted that the channel 134B and the two channels 134A each have a development in plan view, i.e. their own longitudinal development, that reproduces the droplike shape of the two creams 101 and 102 in the dispensed product 100. The delivery sections of these channels are defined on a plane that is parallel to or coincident with the plane on which the channels present their own development.

In effect, the aforesaid channels perform the function of identifying sections of outflow of the cream having shapes and contours already defined, which correspond to the desired ones in the dispensed product. As will be seen in further detail in what follows, the delivered cream will evidently not maintain the same identical geometry of the aforesaid sections but will preserve in any case their general shape (with a droplike profile, in the example illustrated).

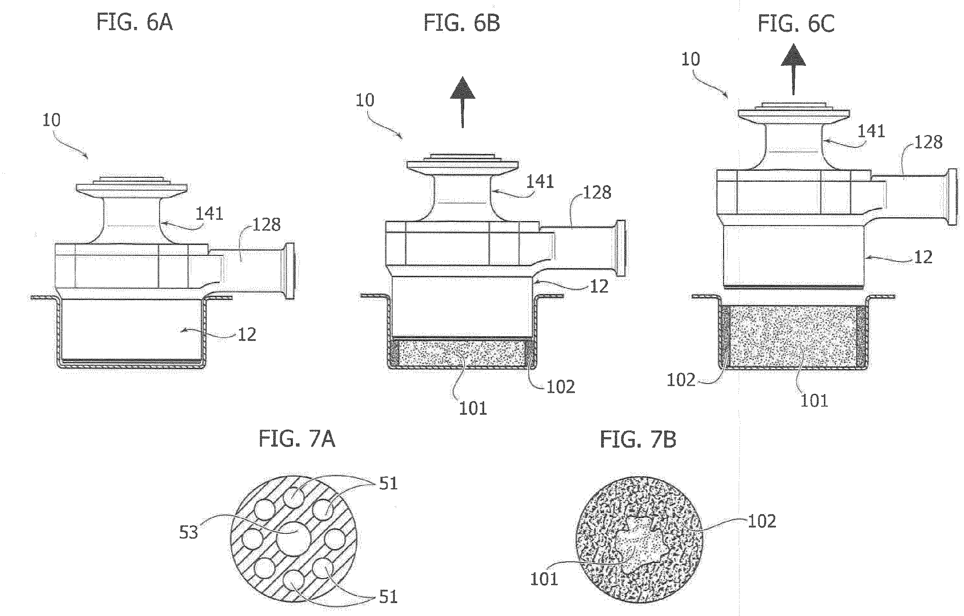

With reference now to the embodiment illustrated (see in particular Figures 6A-6C), for dispensing the product 100 the nozzle assembly 10 is set in an initial position completely lowered on the container, where, in particular, the block 132 is brought into the container, almost in contact with its bottom (Figure 6A).

As soon as delivery of the two creams is started, the nozzle assembly is hence moved adequately upwards, at a rate that is a function of the flowrate of delivery of the cream so that the cream delivered by the channels 134A and 134B will always be immediately adjacent to the free surface of the cream previously dispensed on which it will settle (Figure 6B). Delivery of the cream and concomitant raising of the nozzle assembly continue until the desired level is reached (Figure 6C).

In the light of what has been said above, the two central channels 134A create with a first cream the inner shape 101 of the product 100 (see Figure 2), whereas the outer channel 134B creates with a second cream the outer shape 102.

With particular reference now to Figures 3A and 4, it will be understood that the cream delivered at the centre from the two channels 134A will necessarily have to fill the free gaps between the channels and will hence follow a front of expansion in a transverse direction, i.e., laterally with respect to the outflow section, both towards the inside and towards the outside. Likewise, the cream delivered from the channel 134B will follow a front of expansion prevalently directed towards the inside.

The fronts of expansion of the two creams will meet along an interface, which will maintain the same shape as the sections of outflow of the aforesaid channels and, in particular, will have a profile well outlined and without any particular irregularities (see Figure 2).

The dispensed product 100 thus obtained will hence reproduce, at least on its top surface, two shapes - with a droplike profile, in the example illustrated - with sharp and well-defined contours.

By way of comparison, Figure 7B illustrates a dispensed product obtained, instead, via a conventional nozzle assembly of the type illustrated in the document No. FR 2708563. As has been seen, this assembly comprises (see Figure 7A) a central duct 53 for dispensing the cream at the centre and a series of ducts 51 arranged around the central duct for dispensing the cream peripherally.

As represented schematically in Figure 7B, even though the outlets mentioned above of the nozzle are arranged according to a precise geometry, the shapes obtained on the dispensed product have in effect very irregular profiles that jeopardize the overall aesthetic effect.

To return to the solution described herein, with reference to Figure 3A, it should be noted that it is preferable, from both the constructional standpoint and the standpoint of fluid-dynamic efficiency, for the ducts 132A and 132B to be arranged on the body 132 along paths that reproduce the shapes of the channels with which they are in communication. Preferably, the number of the ducts is such that the flowrate within the individual duct is less than 10%, preferably equal to or less than 5%, of the total flowrate through the respective channel that is supplied thereby. In various embodiments, the ratio between the total area of the ducts and the area of the respective channel is greater than 1.

Furthermore, it is also preferable for the areas of the underside of the block 132 adjacent to the channels to envisage surface portions 136 that are recessed, i.e., without material, in order to prevent contact with the dispensed cream and enable the latter to distribute in a homogeneous way.

The channels of the nozzle assembly described herein may have a limited depth, even considerably smaller than the length of the ducts, provided that the depth is sufficient to obtain the correct distribution of the cream within the channels. Furthermore, it is preferable for the depth of the channels to be such as to enable, between one dispensing and the next, the cream to be withheld in the channel by capillarity.

The nozzle assembly described herein may in any case provide constructional solutions different from the one described above, according to the requirements of the various applications. For instance, according to the type of product dispensed and the patterns or shapes envisaged, the number, shape, and size of the various channels may vary, as likewise the number, shape, and size of the distribution ducts.

Again, on the basis, for example, of the material of which the nozzle assembly is made, also the structure, shapes, and number of the parts that make it up may vary. In an alternative embodiment, the nozzle body may, for example, be constituted by a first, collecting, body defining the chambers A and B, a plurality of tubes that define the distribution ducts, and a second, plate-shaped, body, which is connected to the aforesaid tubes and defines the delivery channels.

In view of the above, in one or more embodiments, the nozzle assembly here described comprises at least one first section for delivery of a first cream, and at least one second section for delivery of a second cream, and at least one first duct and one second duct for separate and independent supply of said first and second creams, respectively, to said first and second sections, said nozzle assembly being characterized in that it comprises:
- a first series of ducts (132A) for supply of said first cream;
- a second series of ducts (132B) for supply of said second cream;
- at least one first channel (134A), which is in communication with said first series of ducts (132A) so as to receive from these said first cream and has a longitudinal development that reproduces a shape corresponding to a desired pattern of said first cream in said dispensed product, an end section of said first channel that is contained in a plane parallel to or coincident with the plane on which said first channel presents said longitudinal development, defining said first delivery section; and
- at least one second channel (134B), which is in communication with said second series of ducts (132B) so as to receive from these said second cream and has a longitudinal development that reproduces a shape corresponding to a desired pattern of said second cream in said dispensed product, an end section of said second channel that is contained in a plane parallel to or coincident with the plane on which said channel presents said longitudinal development, defining said second delivery section.

Furthermore, in view of the above, in one or more embodiments, the method here described for dispensing food-creams in a container to obtain a dispensed product (100) constituted by at least two creams (101, 102), comprises the step of dispensing a first cream and a second cream in a separate and independent way through a nozzle assembly of a dispensing head comprising at least one first section for delivery of said first cream and at least one second section for delivery of said second cream, said method being characterized in that it comprises the steps of:
- supplying said first cream through a first series of ducts (132A) of said nozzle assembly;
- supplying said second cream through a second series of ducts (132B) of said nozzle assembly;
- collecting the cream that exits from said first ducts (132A) in a first channel (134A) of said nozzle assembly, which has a longitudinal development that reproduces a shape corresponding to a desired pattern of said first cream (101) in said dispensed product (100), an end section of said first channel that is contained in a plane parallel to or coincident with the plane on which said channel presents said longitudinal development, defining said first delivery section, wherein the cream flows within said first channel along a direction transversal to the plane on which said first channel presents said longitudinal development;
- collecting the cream that exits from said second ducts (132B) in a second channel (134B), which has a longitudinal development that reproduces a shape corresponding to a desired pattern of said second cream (102) in said dispensed product (100), an end section of said second channel that is contained in a plane parallel to or coincident with the plane on which said channel presents said longitudinal development, defining said second delivery section, wherein the cream flows within said second channel along a direction transversal to the plane on which said second channel presents said longitudinal development;
- dispensing said first cream through said first delivery section; and
- dispensing said second cream through said second delivery section.

Of course, without prejudice to the principle of the invention, the details of construction and the embodiments may vary, even significantly, with respect to what has been illustrated herein purely by way of non-limiting example, without thereby departing from the scope of the invention, as defined in the annexed claims.

## Claims

1. A nozzle assembly (10) for a head for dispensing food-creams to obtain a dispensed product (100) constituted by at least two creams (101, 102), said nozzle assembly comprising at least one first section for delivery of a first cream, and at least one second section for delivery of a second cream, and at least one first duct and one second duct for separate and independent supply of said first and second creams, respectively, to said first and second sections, said nozzle assembly further comprising:
- a first series of ducts (132A) for supply of said first cream;
- a second series of ducts (132B) for supply of said second cream; and being **characterized in that** it comprises:
- at least one first channel (134A), which is in communication with said first series of ducts (132A) so as to receive from these said first cream and has a longitudinal development that reproduces a shape corresponding to a desired pattern of said first cream in said dispensed product, an end section of said first channel that is contained in a plane parallel to or coincident with the plane on which said first channel presents said longitudinal development, defining said first delivery section; and
- at least one second channel (134B), which is in communication with said second series of ducts (132B) so as to receive from these said second cream and has a longitudinal development that reproduces a shape corresponding to a desired pattern of said second cream in said dispensed product, an end section of said second channel that is contained in a plane parallel to or coincident with the plane on which said second channel presents said longitudinal development, defining said second delivery section.

2. The assembly according to Claim 1, wherein said first series of ducts (132A) are arranged along a path that reproduces said shape of said first channel (134A); and wherein said second series of ducts (132B) are arranged along a path that reproduces said shape of said second channel (134B).

3. The assembly according to Claim 1 or Claim 2, wherein said first and second channels (134A, 134B) are set at a distance from one another.

4. The assembly according to Claim 3, wherein between said first channel and said second channel, on the external underside of said assembly, at least one recessed surface (136) is provided.

5. The assembly according to any one of the preceding claims, wherein the depth of said first and second channels is considerably smaller than the length of said ducts, such as to enable, between one dispensing and the next, the cream to be withheld in the channel by capillarity.

6. The assembly according to any one of the preceding claims, wherein said first and second channels (134A, 134B) follow a closed path and wherein one of said channels surrounds the other.

7. The assembly according to any one of the preceding claims, comprising a first chamber (A), which is in communication with a first inlet (141) of said assembly and with said first series of ducts (132A) for supplying said first cream to said series of ducts, and a second chamber (B), separate from said first chamber (A), which is in communication with a second inlet (128) of said assembly and with said second series of ducts (132B) for supplying said second cream to said second series of ducts.

8. A method for dispensing food-creams in a container to obtain a dispensed product (100) constituted by at least two creams (101, 102), comprising the step of dispensing a first cream and a second cream in a separate and independent way through a nozzle assembly of a dispensing head comprising at least one first section for delivery of said first cream and at least one second section for delivery of said second cream, said method further comprising the steps of:
- supplying said first cream through a first series of ducts (132A) of said nozzle assembly;
- supplying said second cream through a second series of ducts (132B) of said nozzle assembly; and being **characterized in that** it comprises the steps of:
- collecting the cream that exits from said first ducts (132A) in a first channel (134A) of said nozzle assembly, which has a longitudinal development that reproduces a shape corresponding to a desired pattern of said first cream (101) in said dispensed product (100), an end section of said first channel that is contained in a plane parallel to or coincident with the plane on which said first channel presents said longitudinal development, defining said first delivery section;
- collecting the cream that exits from said second ducts (132B) in a second channel (134B), which has a longitudinal development that reproduces a shape corresponding to a desired pattern of said second cream (102) in said dispensed product (100), an end section of said second channel that is contained in a plane parallel to or coincident with the plane on which said second channel presents said longitudinal development, defining said second delivery section;
- dispensing said first cream through said first delivery section; and
- dispensing said second cream through said second delivery section.

9. The method according to Claim 8, wherein said first and second creams delivered, respectively, by said first and second channels (134A, 134B) expand laterally according to opposite fronts that meet along an interface that has a predetermined profile defining said desired patterns of said first and second creams.

10. The method according to Claim 8 or Claim 9, wherein said first and second creams are delivered through said delivery sections of said first and second channels (134A, 134B) according to respective flows having an annular shape that are one inside the other.

## Patentansprüche

1. Düsenanordnung (10) für einen Kopf zum Spenden von Lebensmittelcremen, um ein gespendetes Produkt (100) zu erhalten, das durch zumindest zwei Cremen (101, 102) gebildet wird, wobei die Düsenanordnung zumindest einen ersten Abschnitt zur Bereitstellung einer ersten Creme und zumindest einen zweiten Abschnitt zur Bereitstellung einer zweiten Creme umfasst und zumindest eine erste Leitung und eine zweite Leitung zur getrennten und unabhängigen Bereitstellung der ersten bzw. zweiten Creme an den ersten und zweiten Abschnitt, wobei die Düsenanordnung ferner umfasst:
- eine erste Reihe an Leitungen (132A) zur Bereitstellung der ersten Creme;
- eine zweite Reihe an Leitungen (132B) zur Bereitstellung der zweiten Creme;
und **dadurch gekennzeichnet, dass** sie umfasst:
- zumindest einen ersten Kanal (134A), der in Verbindung mit der ersten Reihe Leitungen (132A) steht, um von diesem die erste Creme zu empfangen und einen Längsaufbau aufweist, der eine Form wiedergibt, die einem gewünschten Muster der ersten Creme in dem gespendeten Produkt entspricht, wobei ein Endabschnitt des ersten Kanals, der in einer parallelen Ebene oder deckungsgleichen Ebene mit der Ebene enthalten ist, auf der der erste Kanal den Längsaufbau wiedergibt, den ersten Bereitstellungsabschnitt festlegt; und
- zumindest einen zweiten Kanal (134B), der in Verbindung mit der zweiten Reihe an Leitungen (132B) steht, um von diesen die zweite Creme zu empfangen und einen Längsaufbau aufweist, der eine Form wiedergibt, die einem gewünschten Muster der zweiten Creme in dem gespendeten Produkt entspricht, wobei ein Endabschnitt des zweiten Kanals, der in einer parallelen Ebene oder deckungsgleichen Ebene mit der Ebene enthalten ist, auf der der zweite Kanal den Längsaufbau wiedergibt, den zweiten Bereitstellungsabschnitt festlegt.

2. Anordnung nach Anspruch 1, bei der die erste Reihe an Leitungen (132A) entlang einer Bahn angeordnet ist, die die Form des ersten Kanals (134A) wiedergibt; und wobei die zweite Reihe an Leitungen (132B) entlang einer Bahn angeordnet ist, die die Form des zweiten Kanals (134B) wiedergibt.

3. Anordnung nach Anspruch 1 oder 2, bei der der erste und zweite Kanal (134A, 134B) mit einem Abstand voneinander angeordnet sind.

4. Anordnung nach Anspruch 3, bei der zwischen dem ersten Kanal und dem zweiten Kanal, an der externen Unterseite der Anordnung, zumindest eine ausgenommene Oberfläche (136) vorgesehen ist.

5. Anordnung nach einem der vorhergehenden Ansprüche, bei der die Tiefe des ersten und zweiten Kanals erheblich kleiner ist als die Länge der zweiten Leitungen, um es zwischen einem Spenden und dem nächsten zu ermöglichen, die Creme in dem Kanal durch Kapillarwirkung zurückzuhalten.

6. Anordnung nach einem der vorhergehenden Ansprüche, bei der der erste und zweite Kanal (134A, 134B) einer geschlossenen Bahn folgen und bei der einer der Kanäle den anderen umschließt.

7. Anordnung nach einem der vorhergehenden Ansprüche, umfassend eine erste Kammer (A), die in Verbindung mit einem ersten Einlass (141) der Anordnung und mit der ersten Reihe an Leitungen (132A) zum Bereitstellen der ersten Creme an die erste Reihe von Leitungen steht, und eine zweite Kammer (B), getrennt von der ersten Kammer (A), die in Verbindung mit einem zweiten Einlass (128) der Anordnung und mit der zweiten Reihe an Leitungen (132B) zum Bereitstellen der zweiten Creme an die zweite Reihe von Leitungen steht.

8. Verfahren zum Spenden von Lebensmittelcremen in einen Behälter, um ein gespendetes Produkt (100) zu erhalten, das durch zumindest zwei Cremen (101, 102) gebildet wird, umfassend den Schritt des Spendens einer ersten Creme und einer zweiten Creme auf eine getrennte und unabhängige Weise durch eine Düsenanordnung eines Düsenkopfes umfassend zumindest einen ersten Abschnitt zum Bereitstellen der ersten Creme und zumindest einem zweiten Abschnitt zum Bereitstellen der zweiten Creme, wobei das Verfahren ferner die Schritte umfasst:
- Bereitstellen einer ersten Creme durch eine erste Reihe an Leitungen (132A) der Düsenanordnung;
- Bereitstellen einer zweiten Creme durch eine zweite Reihe an Leitungen (132B) der Düsenanordnung;
und **dadurch gekennzeichnet, dass** es ferner die Schritte umfasst:
- Sammeln der Creme, die aus den ersten Leitungen (132A) in einem ersten Kanal (134A) der Düsenanordnung austritt, der einen Längsaufbau aufweist, der eine Form wiedergibt, die einem gewünschten Muster der ersten Creme (101) in dem gespendeten Produkt (100) entspricht, wobei ein Endabschnitt des ersten Kanals, der in einer Ebene parallel oder deckungsgleich mit der Ebene enthalten ist, an der der erste Kanal die Längsausrichtung wiedergibt, den ersten Bereitstellungsabschnitt festlegt;
- Sammeln der Creme, die aus den zweiten Leitungen (132B) in einem zweiten Kanal (134B) austritt, der eine Längsaufbau aufweist, der eine Form wiedergibt, die einem gewünschten Muster der zweiten Creme (102) in dem gespendeten Produkt (100) entspricht, wobei ein Endabschnitt des zweiten Kanals, der in einer Ebene parallel oder deckungsgleich mit der Ebene enthalten ist, an der der zweite Kanal die Längsausrichtung wiedergibt, den zweiten Bereitstellungsabschnitt festlegt;
- Spenden der ersten Creme durch den ersten Bereitstellungsabschnitt; und
- Spenden der zweiten Creme durch den zweiten Bereitstellungsabschnitt.

9. Verfahren nach Anspruch 8, bei dem die erste und zweite Creme, die jeweils durch den ersten und zweiten Kanal (134A, 134B) bereitgestellt werden, sich lateral vergrößern gemäß gegenüberliegender Vorderseiten, die sich entlang einer Schnittstelle treffen, die ein vorgegebenes Profil aufweist, das die gewünschten Muster der ersten und zweiten Cremen festgelegt.

10. Verfahren nach Anspruch 8 oder Anspruch 9, bei dem die erste und zweite Creme durch die Bereitstellungsabschnitte der ersten und zweiten Kanäle (134A, 134B) gemäß entsprechender Strömungen bereitgestellt werden, die eine ringförmige Form aufweisen, bei der sich eine in der anderen befindet.

## Revendications

1. Ensemble de buse (10) pour une tête de distribution de crèmes alimentaires afin d'obtenir un produit distribué (100) constitué par au moins deux crèmes (101, 102), ledit ensemble de buse comprenant au moins une première section pour la distribution d'une première crème, et au moins une seconde section pour la distribution d'une seconde crème, et au moins un premier conduit et un second conduit pour amener séparément et indépendamment lesdites première et seconde crèmes, respectivement, auxdites première et seconde sections, ledit ensemble de buse comprenant en outre :
- une première série de conduits (132A) pour l'alimentation de ladite première crème ;
- une seconde série de conduits (132B) pour l'alimentation de ladite seconde crème ;
et étant **caractérisé en ce qu'**il comprend :
- au moins un premier canal (134A) qui est en communication avec ladite première série de conduits (132A) afin de recevoir de ces derniers, ladite première crème, et a un développement longitudinal qui reproduit une forme correspondant à un motif souhaité de ladite première crème dans ledit produit distribué, une section d'extrémité dudit premier canal qui est contenue dans un plan parallèle à ou coïncidant avec le plan sur lequel ledit premier canal présente ledit développement longitudinal, définissant ladite première section de distribution ; et
- au moins un second canal (134B) qui est en communication avec ladite seconde série de conduits (132B) afin de recevoir de ces derniers, ladite seconde crème, et a un développement longitudinal qui reproduit une forme correspondant à un motif souhaité de ladite seconde crème dans ledit produit distribué, une section d'extrémité dudit second canal qui est contenue dans un plan parallèle à ou coïncidant avec le plan sur lequel ledit second canal présente ledit développement longitudinal, définissant ladite seconde section de distribution.

2. Ensemble selon la revendication 1, dans lequel ladite première série de conduits (132A) est agencée le long d'une trajectoire qui reproduit ladite forme dudit premier canal (134A) ; et dans lequel ladite seconde série de conduits (132B) est agencée le long d'une trajectoire qui reproduit ladite forme dudit second canal (134B).

3. Ensemble selon la revendication 1 ou la revendication 2, dans lequel lesdits premier et second canaux (134A, 134B) sont placés à une certaine distance l'un de l'autre.

4. Ensemble selon la revendication 3, dans lequel, entre ledit premier canal et ledit second canal, sur la face inférieure externe dudit ensemble, au moins une surface enfoncée (136) est prévue.

5. Ensemble selon l'une quelconque des revendications précédentes, dans lequel la profondeur desdits premier et second canaux est considérablement inférieure à la longueur desdits conduits, afin de permettre, entre une distribution et la suivante, de retenir la crème dans le canal, par capillarité.

6. Ensemble selon l'une quelconque des revendications précédentes, dans lequel lesdits premier et second canaux (134A, 134B) suivent une trajectoire fermée et dans lequel l'un desdits canaux entoure l'autre.

7. Ensemble selon l'une quelconque des revendications précédentes, comprenant une première chambre (A) qui est en communication avec une première entrée (141) dudit ensemble et avec ladite première série de conduits (132A) pour amener ladite première crème à ladite série de conduits, et une seconde chambre (B) séparée de ladite première chambre (A), qui est en communication avec une seconde entrée (128) dudit ensemble et avec ladite seconde série de conduits (132B) pour amener ladite seconde crème à ladite seconde série de conduits.

8. Procédé pour distribuer des crèmes alimentaires dans un récipient afin d'obtenir un produit distribué (100) constitué pour au moins deux crèmes (101, 102), comprenant l'étape pour distribuer une première crème et une seconde crème d'une manière séparée et indépendante par un ensemble de buse d'une tête de distribution comprenant au moins une première section pour la distribution de ladite première crème et au moins une seconde section pour la distribution de ladite seconde crème, ledit procédé comprenant les étapes consistant à :
- fournir ladite première crème à travers une première série de conduits (132A) dudit ensemble de buse ;
- fournir ladite seconde crème à travers une seconde série de conduits (132B) dudit ensemble de buse ;
et **caractérisé en ce qu'**il comprend les étapes consistant à :
- collecter la crème qui sort desdits premiers conduits (132A) dans un premier canal (134A) dudit ensemble de buse, qui a un développement longitudinal qui reproduit une forme correspondant à un motif souhaité de ladite première crème (101) dans ledit produit distribué (100), une section d'extrémité dudit premier canal qui est contenue dans un plan parallèle à ou coïncidant avec le plan sur lequel ledit premier canal présente ledit développement longitudinal, définissant ladite première section de distribution ;
- collecter la crème qui sort desdits seconds conduits (132B) dans un second canal (134B), qui a un développement longitudinal qui reproduit une forme correspondant à un motif souhaité de ladite seconde crème (102) dans ledit produit distribué (100), une section d'extrémité dudit second canal qui est contenue dans un plan parallèle à ou coïncidant avec le plan sur lequel ledit second canal présente ledit développement longitudinal, définissant ladite seconde section de distribution ;
- distribuer ladite première crème à travers ladite première section de distribution ; et
- distribuer ladite seconde crème à travers ladite seconde section de distribution.

9. Procédé selon la revendication 8, dans lequel lesdites première et seconde crèmes distribuées, respectivement, par lesdits premier et second canaux (134A, 134B) subissent une expansion latérale selon des parties avant opposées qui se rencontrent le long d'une interface qui a un profil prédéterminé définissant lesdits motifs souhaités desdites première et seconde crèmes.

10. Procédé selon la revendication 8 ou la revendication 9, dans lequel lesdites première et seconde crèmes sont distribuées à travers lesdites sections de distribution desdits premier et second canaux (134A, 134B) selon des écoulements respectifs ayant une forme annulaire qui sont l'un à l'intérieur de l'autre.
